# EUROPÄISCHE PATENTANMELDUNG

(11) **EP 1 083 087 A2**
(43) Veröffentlichungstag der Anmeldung: **14.03.2001**
(21) Anmeldenummer: 00119075.0
(22) Anmeldetag: 02.09.2000
(51) Int. Cl.: B60Q 1/04

(54) **Steuereinrichtung für eine Lichteinheit von Fahrzeugen**

(30) Priorität: 08.09.1999 DE 19942729
(71) Anmelder: Hella KG Hueck & Co., 59552 Lippstadt (DE)
(72) Erfinder: Lange, Petrik, Dr., 59557 Lippstadt (DE); Passgang, Frank, 59556 Lippstadt (DE); Mertens, Wilhelm, 33397 Rietberg (DE); Reuter, Jürgen, 59609 Anröchte (DE)

(57) **Zusammenfassung**

Steuereinrichtung für eine Lichteinheit (1) von Fahrzeugen, insbesondere von Kraftfahrzeugen, mit einer elektronischen Steuereinheit (2) zur Steuerung der Lichteinheit (1), wobei die Steuereinheit (2) eine I/O-Schnittstelle aufweist zur Verbindung mit einer Mehrzahl von der Lichteinheit (1) zugeordneten Steuer- und/ oder Schaltmitteln, wobei die elektronische Steuereinheit (2) in einem quaderförmigen Gehäuse (24,34,53) angeordnet ist, daß in einer Aufnahme (41,51) der Lichteinheit (1) lösbar gelagert ist und daß auf einer ersten Seite eine erste Kontaktierungseinrichtung (3,54) zur Verbindung der elektronischen Steuereinheit (2) mit einer Anzahl von in der Lichteinheit (1) integrierten elektrischen Bauelementen (4-13) und daß zusätzlich auf einer zweiten Seite eine zweite Kontaktierungseinrichtung (14,64) zur Verbindung der elektronischen Steuereinheit (2) mit einer Anzahl von der Lichteinheit (1) nebengeordneten zusätzlichen elektrischen Bauelementen (15-20) vorgesehen ist.

## Beschreibung

Die Erfindung betrifft eine Steuereinrichtung für eine Lichteinheit von Fahrzeugen, insbesondere von Kraftfahrzeugen, mit einer elektronischen Steuereinheit zur Steuerung der Lichteinheit, wobei die Steuereinheit eine I/O-Schnittstelle aufweist zur Verbindung mit einer Mehrzahl von der Lichteinheit zugeordneten Steuer- und/ oder Schaltmitteln.

Aus der EP 0 624 495 B1 ist eine Steuereinrichtung für eine Lichteinheit von Fahrzeugen bekannt, die eine elektronische Steuereinheit zur Steuerung einer aus mehreren Lampen bestehenden Lichteinheit aufweist. Die elektronische Steuereinheit ist im wesentlichen als Leiterplatte ausgebildet, die an einer offenen Seite einer quaderförmigen Aufnahme eingesetzt ist und mittels eines Verschlußdeckels in derselben arretiert ist. Die elektronische Steuereinheit ist mit Leiterbahnen der Lampen verbunden und dient lediglich zum gesteuerten Ein- und Ausschalten derselben.

Aus der DE 196 00 638 A1 ist eine Steuereinrichtung für eine Lichteinheit von Fahrzeugen bekannt, die eine elektronische Steuereinheit zur Steuerung der Lichteinheit aufweist. Die elektronische Steuereinheit ist in einem Gehäuse untergebracht, das wiederum an einer Verschlusskappe der Lichteinheit befestigt ist. Zu diesem Zweck ist eine an die Form der Verschlußkappe angepaßte Aufnahme für das Gehäuse vorgesehen. Nachteilig an der bekannten Steuereinrichtung ist, daß die Anbringung der Steuereinheit an der Lichteinheit relativ aufwendig ist. Ferner ist eine schlechte Zugänglichkeit der Steuereinheit gegeben, da sie von unten an der Verschlußkappe befestigt ist.

Weiterhin ist aus der EP 0 830 982 A2 eine Steuereinrichtung für eine Lichteinheit von Fahrzeugen bekannt, die geeignet ist, neben der eigentlichen Lichtfunktion der Lichteinheit auch weitere beispielsweise mechanische Funktionen der Lichteinheit zu steuern. Die elektronische Steuereinheit weist eine I/O-Schnittstelle auf, mittels der sie mit einer Mehrzahl von der Lichteinheit zugeordneten Steuer- bzw. Schaltmitteln verbunden ist. Nachteilig an der bekannten Steuereinrichtung ist, daß sie lediglich zur Steuerung von ausschließlich der Lichteinheit zugeordneten elektrisch betätigbaren Funktionen dient.

Aufgabe der vorliegenden Erfindung ist es, eine Steuereinrichtung für eine Lichteinheit von Fahrzeugen derart weiterzubilden, daß zum einen die Funktionalität der elektronischen Steuereinheit erweitert wird und zum anderen die elektronische Steuereinheit einen kompakten und platzsparenden Aufbau aufweist, wobei die Arretierung an die Lichteinheit derart erfolgt, daß eine gute Zugänglichkeit der Steuereinheit gewährleistet ist.

Zur Lösung dieser Aufgabe ist die Erfindung in Verbindung mit dem Oberbegriff des Patentanspruchs 1 dadurch gekennzeichnet, daß die elektronische Steuereinheit in einem Gehäuse angeordnet ist, das in einer Aufnahme der Lichteinheit lösbar gelagert ist, daß auf einer ersten Seite des Gehäuses eine erste Kontaktierungseinrichtung zur Verbindung der elektronischen Steuereinheit mit einer Anzahl von in der Lichteinheit integrierten elektrischen Bauelementen und daß zusätzlich auf einer zweiten Seite des Gehäuses eine zweite Kontaktierungseinrichtung zur Verbindung der elektronischen Steuereinheit mit einer Anzahl von der Lichteinheit nebengeordneten zusätzlichen elektrischen Bauelementen vorgesehen ist.

Der Vorteil der erfindungsgemäßen Steuereinrichtung besteht zum einen darin, daß eine elektronische Steuereinheit kompakt in einem Gehäuse angeordnet ist, das bedienungsfreundlich in eine Aufnahme der Lichteinheit eingesetzt bzw. aus derselben entnommen werden kann. Das Gehäuse weist an einer ersten Seite eine erste Kontaktierungseinrichtung auf zur elektrischen Verbindung mit einer Anzahl von in der Lichteinheit integrierten elektrischen Bauelementen, wie beispielsweise Lampen, Leuchtweitensteller. Zusätzlich weist das Gehäuse eine zweite Kontaktierungseinrichtung zur Verbindung der elektronischen Steuereinheit mit einer Anzahl von der Lichteinheit nebengeordneten zusätzlichen Bauelementen auf. Erfindungsgemäß wird hierdurch ermöglicht, daß auch ortsnahe weitere optische und/ oder elektrische Zusatzfunktionen, wie beispielsweise Zusatznebellicht und Zusatzlüfter, angesteuert werden können. Vorteilhaft kann die zweite Kontaktierungseinrichtung auch dazu genutzt werden, die elektronische Steuereinheit mit dem Bordnetz bzw. zentralen Baueinheiten des Fahrzeugs zu verbinden. Grundgedanke der Erfindung ist es, in einem räumlich begrenzten Bereich des Fahrzeugs eine dezentrale Steuereinheit vorzusehen, mittels derer jegliche in der Nähe angeordnete elektrisch betätigbare Funktionen ansteuerbar sind.

Nach einer besonderen Ausführungsform der Erfindung ist das Gehäuse in einer taschenförmigen Aufnahme der Lichteinheit gelagert. Vorzugsweise ist die taschenförmige Aufnahme nach oben offen ausgebildet, so daß das Gehäuse einfach montiert bzw. demontiert werden kann.

Nach einer Weiterbildung der Erfindung ist die erste Kontaktierungseinrichtung in einem Bodenbereich der taschenförmigen Aufnahme angeordnet, so daß eine sichere und geschützte Kontaktierung der elektronischen Steuereinheit mit der Lichteinheit unter Einwirkung der Gewichtskraft des Gehäuse erfolgen kann.

Nach einer Weiterbildung der Erfindung ist die taschenförmige Aufnahme als u-förmiges Halteteil ausgebildet, das an einer Rückseite der Lichteinheit angeformt ist. Vorteilhaft kann hierdurch die Breite und die Höhe des Gehäuses an die Dimension der Rückseite der Lichteinheit angepaßt sein, so daß die elektronische Steuereinheit platzsparend unmittelbar rückseitig der Lichteinheit anschließend angebracht sein kann.

Nach einer Ausgestaltung der Erfindung ist das Gehäuse rastend in der taschenförmigen Aufnahme der Lichteinheit gehalten. Eine Mehrzahl von Kontaktelementen der zweiten Kontaktierungseinrichtung erstreckt sich im wesentlichen bündig zu einer Seite der Lichteinheit und schließt diese ab. Vorzugsweise erstrecken sich die Kontaktelemente paarweise in einer Reihe und vollständig über die zweite Seite des Gehäuses, so daß die zweite Seite des Gehäuses nach Verbindung der Kontaktelemente mit einem korrespondierenden Steckverbinder im wesentlichen vollständig abgedeckt ist.

Ausführungsbeispiele der Erfindung werden nachfolgend anhand der Zeichnungen näher erläutert.

Es zeigen:

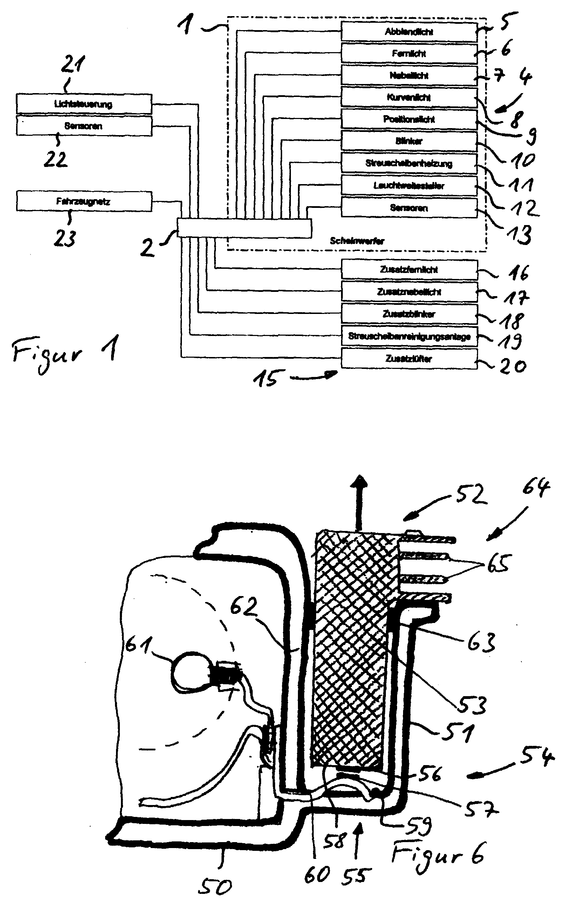

- Figur 1: ein Blockschaltbild mit einer elektronischen Steuereinheit für eine als Scheinwerfer ausgebildete Lichteinheit,
- Figur 2: ein Längsschnitt einer in einer Lichteinheit montierten elektronischen Steuereinheit nach einem ersten Ausführungsbeispiel,
- Figur 3: ein Schnitt entlang der Linie III-III gemäß Figur 2,
- Figur 4: ein Längsschnitt einer in der Lichteinheit montierten elektronischen Steuereinheit nach einem zweiten Ausführungsbeispiel,
- Figur 5: ein Schnitt entlang der Linie V-V gemäß Figur 4 und
- Figur 6: ein Längsschnitt einer Lichteinheit mit einer montierten elektronischen Steuereinheit nach einem dritten Ausführungsbeispiel.

Nach der Erfindung weist eine Steuereinrichtung für eine Lichteinheit 1, die vorzugsweise als in bekannter Weise aufgebauter Scheinwerfer ausgebildet ist, eine elektronische Steuereinheit 2 auf, die über eine erste Kontaktierungseinrichtung 3 mit einer Anzahl von in der Lichteinheit 1 integrierten elektrischen Bauelementen 4 verbunden ist. Die Bauelemente 4 können als Lampen ausgebildet sein, beispielsweise als ein Abblendlicht 5, ein Fernlicht 6, ein Nebellicht 7, ein Kurvenlicht 8, ein Positionsticht 9 oder ein Blinklicht 10. Weiterhin kann die Lichteinheit 1 eine Streuscheibenheizung 11, einen Leuchtweitensteller 12 und Sensoren 13 aufweisen, die mittels der Steuereinheit 2 elektrisch betätigbar sind. Zu diesem Zweck generiert die elektronische Steuereinheit 2, die vorzugsweise einen Mikroprozessor aufweist, Steuer- bzw. Schaltsignale, die mittels einer nicht dargestellten I/O-Schnittstelle und der ersten Kontaktierungseinrichtung 3 zu den entsprechenden Bauelementen 4 übertragen werden.

Die elektronische Steuereinheit 2 weist zusätzlich eine zweite Kontaktierungseinrichtung 14 auf, die die Verbindung mit einer Anzahl von der Lichteinheit 1 nebengeordneten zusätzlichen elektrischen Bauelementen 15 ermöglicht. Diese zusätzlichen elektrischen Bauelemente 15 können beispielsweise ein Zusatzfernlicht 16, ein Zusatznebellicht 17, ein Zusatzblinklicht 18, eine Streuscheibenreinigungsanlage 19 oder ein Zusatzlüfter 20 sein, die in der Nähe der Lichteinheit 1 angeordnet sind. Weiterhin ist die elektronische Steuereinheit 2 mittels der zweiten Kontaktierungseinrichtung 14 mit einer zentralen Lichtsteuerung 21 verbunden, die zu der elektronischen Steuereinheit 2 übergeordnet ist und über Schalt- bzw. Steuermittel verfügt zur Ansteuerung der Bauelemente 4, 15. Ferner ist die elektronische Steuereinheit 2 über die zweite Kontaktierungseinrichtung 14 mit ortsfernen Sensoren 22 des Fahrzeugs verbunden, beispielsweise einem Geschwindigkeitssensor und einem Höhensensor, von dessen Sensorgrößen die Ansteuerung der Lichtfunktionen der Lichteinheit 1 bzw. der zusätzlichen Lichtfunktionen abhängt. Ferner ist die elektronische Steuereinheit 2 mittels der zweiten Kontaktierungseinrichtung 14 an ein Fahrzeugnetz 23 gekoppelt, mittels dessen die Spannungsversorgung für die elektronische Steuereinheit 2 bzw. die nachgeordneten Bauelementen 4, 15 gewährleistet ist.

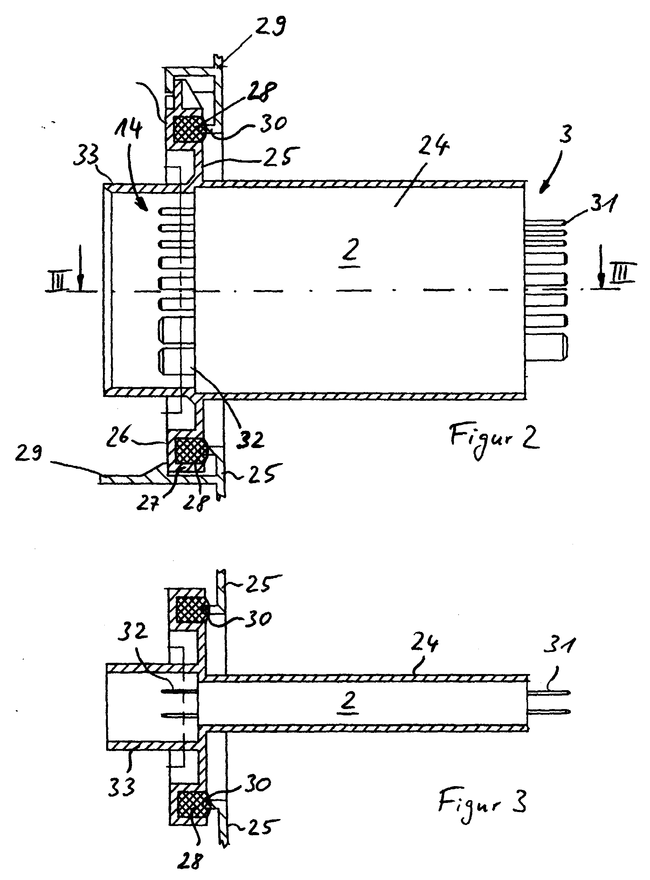

Nach einem ersten Ausführungsbeispiel gemäß Figur 2 und 3 ist die elektronische Steuereinheit 2 in einem quaderförmigen Gehäuse 24 angeordnet, das rastend an einem Scheinwerfergehäuse 25 gehalten ist. Zu diesem Zweck weist das Gehäuse 24 seitlich abragende Raststege 26 auf, die auf einer dem nicht dargestellten Scheinwerfer zugewandten Seite ein offenes U-Profil 27 aufweisen, in der eine Schaum- oder Gummidichtung 28 angeordnet ist. Randseitige Rasthaken 29 des Scheinwerfergehäuses 25 drücken die umlaufende Dichtung 28 gegen einen vorstehenden Anschlag 30 des Scheinwerfergehäuses 25, so daß nach Einsetzen des Gehäuses 24 in die durch die Anschläge 30 begrenzte Öffnung des Scheinwerfergehäuses 25 eine sichere und dichtende lösbare Verbindung zwischen dem Scheinwerfergehäuse 25 und dem Gehäuse 24 der elektronischen Steuereinheit 2 gegeben ist.

Auf einer dem Scheinwerfer zugewandten Seite des Gehäuses 24 sind eine Anzahl von paarweise angeordneten abragenden Kontaktelementen 31 angeordnet, die mit nicht dargestellten Steckkontakten der in dem Scheinwerfer integrierten Bauelemente 4 elektrisch verbindbar sind. Auf einer dem Scheinwerfer abgewandten Seite ist die zweite Kontaktierungseinrichtung 14 mit gleichartig ausgebildeten abragenden Kontaktelementen 32 angeordnet, die mit entsprechenden Steckkontakten der zusätzlichen elektrischen Bauelemente 15 verbindbar sind. Wie aus Figur 3 deutlich wird, ist die Tiefe des Gehäuses 24 derart gewählt, daß sie im wesentlichen der Breite der auf die Kontaktelemente 31 bzw. 32 zu steckenden Steckverbindem entspricht. Das Gehäuse 24 ist daher als abgeflachtes Gehäuse mit einer geringen Tiefe ausgebildet. Zur Aufnahme der Steckverbinder an der zweiten Kontaktierungseinrichtung 14 ist ein umlaufender Kragen 33 vorgesehen.

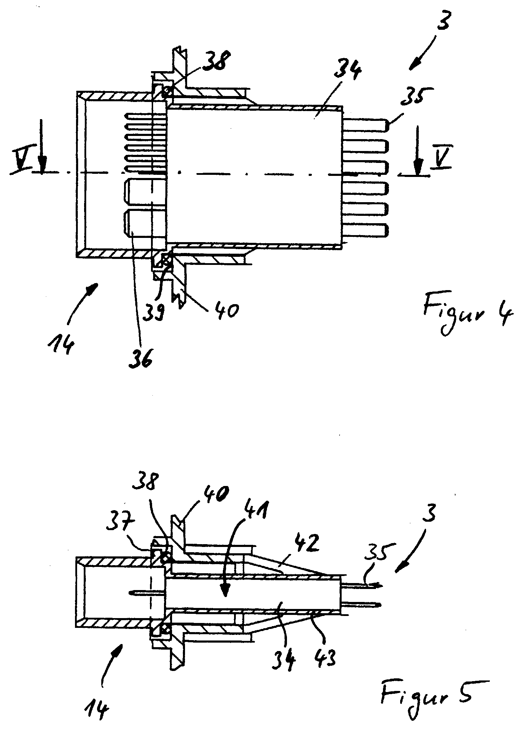

Nach einem weiteren Ausführungsbeispiel gemäß Figur 4 und 5 ist ein Gehäuse 34 der elektronischen Steuereinheit 2 in Übereinstimmung zu dem vorhergehenden Ausführungsbeispiel quaderförmig ausgebildet mit einer aus zwei Reihen von Kontaktelementen 35 bestehenden ersten Kontaktierungseinrichtung 3. Im Unterschied zu dem vorhergehenden Ausführungsbeispiel weist die zweite Kontaktierungseinrichtung 14 eine einzige Reihe von Kontaktelementen 36 auf, so daß das Gehäuse 34 platzsparender ausgebildet ist. Das Gehäuse 34 weist im Bereich der zweiten Kontaktierungseinrichtung 14 lediglich einen kurzen in Querrichtung abragenden und umlaufenden Steg 37 auf, der in der Montagestellung mit einer Dichtung 38 gegen einen Anschlag 39 eines Scheinwerfergehäuses 40 drückt. Zur rastenden Verbindung des Gehäuses 34 in einer Ausnehmung 41 des Scheinwerfergehäuses 40 erstrecken sich in Richtung des Scheinwerfers federnde Rastlappen 42, die an gegenüberliegenden Längsseiten 43 des Gehäuses 34 anliegen und dieses ortsfest in der Ausnehmung 41 verklemmen.

Nach einem dritten Ausführungsbeispiel gemäß Figur 6 ist an einer Rückseite eines Scheinwerfergehäuses 50 eine taschenförmige Aufnahme 51 angeformt, die eine obere Öffnung 52 bildet zum Einsetzen eines Gehäuses 53 für die elektronische Steuereinheit 2. Eine erste Kontaktierungseinrichtung 54 ist in der Montagestellung in einem Bodenbereich 55 der Aufnahme 51 angeordnet. Die erste Kontaktierungseinrichtung 54 weist flächenhafte Kontaktetemente 56, 57 des Gehäuses 53 bzw. des Scheinwerfergehäuses 50 auf, die sich im wesentlichen parallel zueinander gekehrter paralleler Seiten 58 des Gehäuses 53 bzw. einer Bodenseite 59 der Aufnahme 51 erstrecken. Vorzugsweise sind die Kontaktelemente 56, 57 relaisartig ausgebildet. Das Kontaktelement 57 ist mit federnden Leiterbahnen 60 verbunden, die zu einer Lichtquelle 61 des Scheinwerfers 50 führen.

Die taschenförmige Aufnahme 51 ist als u-fömiges Halteteil unter Einbeziehung einer Rückseite 62 des Scheinwerfergehäuses 50 ausgebildet. Zur lagerichtigen Positionierung des Gehäuses 53 sind in einem der Öffnung 52 nahen Bereich umlaufende Dichtungen 63 vorgesehen. Das Gehäuse 53 entspricht in der Höhe und Breite im wesentlichen der Rückseite 62 des Scheinwerfergehäuses 50. Die Tiefe des Gehäuses 53 korrespondiert zu der Breite des u-förmigen Halteteils 51. An einem freiliegenden oberen Bereich einer der Lichtquelle 61 abgewandten Seite des Gehäuses 53 ist eine zweite Kontaktierungseinrichtung 64 angeordnet mit abragenden Kontaktelementen 65. Der Aufbau der zweiten Kontaktierungseinrichtung 64 entspricht im wesentlichen dem Aufbau der zweiten Kontaktierungseinrichtung 14 des Ausführungsbeispiels gemäß Figur 2 und 3.

Durch die nach diesem Ausführungsbeispiel ausgebildete taschenförmige Aufnahme 51 mit einer nach oben hin gerichteten Öffnung wird eine bedienungsfreundliche und einfache Lagerung und Kontaktierung des Gehäuses 43 mit den in dem Scheinwerfergehäuse 50 untergebrachten Bauelementen gewährleistet.

## Patentansprüche

1. Steuereinrichtung für eine Lichteinheit von Fahrzeugen, insbesondere von Kraftfahrzeugen, mit einer elektronischen Steuereinheit zur Steuerung der Lichteinheit, wobei die Steuereinheit eine I/O-Schnittstelle aufweist zur Verbindung mit einer Mehrzahl von der Lichteinheit zugeordneten Steuer- und/ oder Schaltmitteln, dadurch gekennzeichnet, daß die elektronische Steuereinheit (2) in einem Gehäuse (24, 34, 53) angeordnet ist, das in einer Aufnahme (41, 51) der Lichteinheit (1) lösbar gelagert ist, daß auf einer ersten Seite des Gehäuses (24, 34, 53) eine erste Kontaktierungseinrichtung (3, 54) zur Verbindung der elektronischen Steuereinheit (2) mit einer Anzahl von in der Lichteinheit (1) integrierten elektrischen Bauelementen (4, 5, 6, 7, 8, 9, 10, 11, 12, 13) und daß zusätzlich auf einer zweiten Seite des Gehäuses (24, 34, 53) eine zweite Kontaktierungseinrichtung (14, 64) zur Verbindung der elektronischen Steuereinheit (2) mit einer Anzahl von der Lichteinheit (1) nebengeordneten zusätzlichen elektrischen Bauelementen (15, 16, 17, 18, 19, 20) vorgesehen ist.

2. Steuereinrichtung nach Anspruch 1, dadurch gekennzeichnet, daß das Gehäuse (24, 34, 53) in einer taschenförmigen Aufnahme (41, 51) der Lichteinheit (1) gelagert ist.

3. Steuereinrichtung nach Anspruch 1 oder 2, dadurch gekennzeichnet, daß die taschenförmige Aufnahme (51) derart ausgebildet ist, daß eine flächige Seite (58) des Gehäuses (53) unmittelbar an einer Rückseite (62) der Lichteinheit (1) anliegt.

4. Steuereinrichtung nach einem der Ansprüche 1 bis 3, dadurch gekennzeichnet, daß die taschenförmige Aufnahme (5) als ein u-förmiges Halteteil ausgebildet ist, das an der Rückseite (62) der Lichteinheit (1) angeformt ist.

5. Steuereinrichtung nach Anspruch 1 oder 2, dadurch gekennzeichnet, daß die taschenförmige Aufnahme (41) derart ausgebildet ist, daß das Gehäuse (24, 34) von einer Rückseite der Lichteinheit (1) her eingesetzt wird und daß die erste Kontaktierungseinrichtung (3) und die zweite Kontaktierungseinrichtung (14) an gegenüberliegenden, in Montagerichtung vorne und hinten liegenden Seiten des Gehäuses (24, 34) angeordnet sind.

6. Steuereinrichtung nach Anspruch 5, dadurch gekennzeichnet, daß die erste Kontaktierungseinrichtung (3) und! oder die zweite Kontaktierungseinrichtung (14) jeweils an der entsprechenden Seite des Gehäuses (24, 34) abragende Kontaktelemente (31, 32, 35, 36) aufweisen und daß die Kontaktelemente (31, 32, 35, 36) an den entsprechenden Seiten des Gehäuses (24, 34) verteilt angeordnet sind und diese Seiten annähernd vollständig bedecken.

7. Steuereinrichtung nach einem der Ansprüche 1 bis 6, dadurch gekennzeichnet, daß das Gehäuse (24, 34) mittels einer Rastverbindung lösbar in der Aufnahme (41) angeordnet ist.

8. Steuereinrichtung nach einem der Ansprüche 1 bis 7, dadurch gekennzeichnet, daß die erste Kontaktierungseinrichtung (54) und/ oder die zweite Kontaktierungseinrichtung (64) flächenhafte Kontaktelemente (56) aufweisen, die sich parallel zu einer angrenzenden Seite (58) des Gehäuses (53) erstrecken.

9. Steuereinrichtung nach einem der Ansprüche 1 bis 8, dadurch gekennzeichnet, daß die erste Kontaktierungseinrichtung (3) mit Kontaktelementen eines Abblendlichtes (5) und/ oder eines Fernlichtes (6) und/ oder eines Nebellichtes (7) und/ oder eines Kurvenlichtes (8) und/ oder eines Positionslichtes (9) und/ oder eine Blinklichtes (10) und/ oder einer Streuscheibenheizung (11) und/ oder eines Leuchtweitenstellers (12) und/ oder eines Sensors (13) der Leuchteinheit (1) und daß die zweite Kontaktierungseinrichtung (14) mit Kontaktelementen eines Zusatzfernlichtes (16) und/ oder eines Zusatznebellichtes (17) und/ oder eines Zusatzblinklichtes (16) und/ oder einer zusätzlichen Streuscheibenreinigungsanlage (19) und/ oder eines Zusatzlüfters (20), die jeweils in der Nähe der Lichteinheit (1) angeordnet sind, verbindbar sind.

10. Steuereinrichtung nach Anspruch 9, dadurch gekennzeichnet, daß die zweite Kontaktierungseinrichtung (14) mit Kontaktelementen einer zentralen Lichtsteuerung (21) und/ oder weiterer Sensoren (22) und/ oder des Fahrzeugnetzes (23) verbindbar ist.
